# EUROPÄISCHE PATENTSCHRIFT

(11) **EP 1 118 244 B1**
(45) Veröffentlichungstag und Bekanntmachung des Hinweises auf die Patenterteilung: **17.11.2004**
(21) Anmeldenummer: 99955781.2
(22) Anmeldetag: 23.09.1999
(51) Int. Cl.: H04Q 11/04

(54) **SCHALTUNGSANORDNUNG UND VERFAHREN ZUR DURCHSCHALTUNG VON KANÄLEN EINER MEHRKANALVERBINDUNG**
CIRCUIT AND METHOD FOR SWITCHING THROUGH CHANNELS OF A MULTI-CHANNEL CONNECTION
CIRCUIT ET PROCEDE POUR INTERCONNECTER LES CANAUX D'UNE CONNEXION A CANAUX MULTIPLES

(30) Priorität: 29.09.1998 DE 19844732
(43) Veröffentlichungstag der Anmeldung: 25.07.2001
(73) Patentinhaber: SIEMENS AKTIENGESELLSCHAFT, 80333 München (DE)
(72) Erfinder: KRETEN, Axel, D-82178 Puchheim (DE); GNEITING, Dieter, D-81375 München (DE)
(86) Internationale Anmeldenummer: PCT/DE1999/003059
(87) Internationale Veröffentlichungsnummer: WO 2000/019766

(56) Entgegenhaltungen:
- EP-A- 0 594 356
- US-A- 4 512 014
- GUPTA S ET AL: "A COMPARISON OF TWO APPROACHES FOR SWITCHED WIDEBAND CONNECTIONS" 1996 ANNUAL REVIEW OF COMMUNICATIONS, Seiten 549-552, XP000620812

## Beschreibung

Eine herkömmliche Datenübertragung in leitungsvermittelten Schmalband-Telekommunikationsnetzen basiert auf einer analogen und digitalisierten Datenübertragung mit einer Datenübertragungsrate von 64 KBit/s oder Bruchteilen hiervon. Mit dieser Datenübertragungsrate können Sprache, Daten wie z.B. Texte oder Bilder in einem Telekommunikationsnetz übertragen werden, dessen digitale Ausgestaltung und Signalisierung unter dem Begriff Integrated Services Digital Network ISDN bekannt ist.

Mit Beginn des Multimedia-Zeitalters ist der Bedarf an zu übertragenden Datenmengen rapide angestiegen, so daß die oben genannte Datenübertragungsrate für diese Anwendungen nicht mehr ausreicht. Anwendungen wie Zugang zu Online Diensten wie Intranet oder Internet, Videokonferenzen, Distance Learning, Telemedizin, hochbitratige Datenübertragungen, usw. erfordern Datenübertragungsraten, die ein Vielfaches der Datenübertragungsrate des einfachen Telefongespräches beträgt. Die oben genannten Anwendungen können einer der folgenden drei Klassen zugeordnet werden :
Das Schmalband bis 64 KBit/s, das Wideband über 64 KBit/s bis 2Mbit/s und das Breitband über 2 MBit/s.

Während es für Breitband-Netze mit ihren hohen Datenübertragungsraten erforderlich ist, ein vom Schmalbandnetz getrenntes Overlaynetz das z. B. auf der Basis einer Asynchronous Transfer Mode ATM-Technik aufbaut, ist dies für Wideband-Verbindungen unökonomisch. Für diese Datenübertragungsraten wird daher eine Methode verwendet, die unter dem Namen Kanalbündelung bekannt ist. Die Kanalbündelung besteht darin, auf der Sendeseite die anfallende Daten in Datenströme der Granularität von 64 KBit/s zu zerlegen und über einzelne Kanäle durch das Netz durchzuschalten. Per Definition von Wideband-Verbindungen werden hierzu zwischen 2 und 30 Kanäle benötigt. Auf der Empfangsseite ist es wiederum notwendig, die Daten aus diesen N Kanälen wie von der Sendeseite gesendet wieder zusammenzusetzen. Hierzu ist es erforderlich, daß die zeitliche und logische Zusammengehörigkeit der Daten auf den N Kanälen der Empfangsseite bekannt ist.

In einem Netz mit digital übermittelten Daten besteht jede Verbindung aus hintereinander liegenden Abschnitten, die von Vermittlungsstellen und Übertragungsabschnitten gebildet werden. Eine Durchschaltung durch eine Vermittlungsstelle kann hierbei entweder durch Eingabe einer Wahlinformation oder administrativ mit einer Standverbindung erfolgen. Die Daten können über eine Vielzahl von unterschiedlich ausgestalteten Verbindungswegen übertragen werden.

Markant für ein leitungsorientiertes Wählverbindungsnetz ist dabei, daß jede Verbindung unabhängig von allen übrigen Verbindungen durch das Wählverbindungsnetz durchgeschaltet wird. Die optimale Ausnutzung der vorhandenen Netz-Ressourcen bestimmt den Weg der einzelnen Verbindung durch das Netz. Der Initiator einer solchen Verbindung hat einen geringen Einfluß auf diesen Weg. Der Betreiber des Netzes hat durch die Einrichtung von Steuerungsmechanismen Einfluß auf die Lenkung der Datenverkehrsströme.

Zusätzlich zur Verteilung der Datenverkehrsströme in einem Übertragungsnetz ist die Lenkung der Datenverkehrsströme innerhalb einer Vermittlungsstelle zu beachten. Im allgemeinen Fall besteht eine einzelne Vermittlungsstelle wiederum aus einer Kombination von Koppeleinrichtungen, die untereinander durch entsprechende Datenübertragungskanäle vermascht sind.

Insgesamt läßt sich so jede leitungsvermittelte Verbindung innerhalb eines Vermittlungsnetzes als eine Kombination von mindestens zwei Endeinrichtungen, k Koppeleinheiten und k+1 Datenübertragungsstrecken darstellen.

Um bei Wideband-Verbindungen die Zusammengehörigkeit von übertragenen Daten zu identifizieren und die Daten in ihrer Sendereihenfolge wieder herzustellen, gibt es eine Endgerätebasierte und eine Netz-basierte Lösungsvariante. Nachfolgend wird die Netz-basierte Lösung näher betrachtet.

Entsprechend einer zur Verfügung zu stellenden Datenübertragungsrate werden N Kanäle als eine einzige N-fach Verbindung durch das Vermittlungsnetz aufgebaut. Innerhalb des Vermittlungsnetzes sorgt das Vermittlungssystem dafür, daß die benötigten N Einzelkanäle im gesamten Netz immer gemeinsam in einem PCM-System geführt sind, daß heißt das ihre zeitliche Zusammengehörigkeit bestehen bleibt. Beim Durchschalten der N Einzelkanäle innerhalb einer Vermittlungsstelle muß weiterhin dafür gesorgt werden, daß die logische Reihenfolge bzw. logische Zusammengehörigkeit der N Einzelkanäle nicht verändert wird. Die einzuhaltenden Einzelbedingungen hierfür sind in Richtlinien zur Einhaltung der Reihenfolge der PCM Zeitschlitze (Time Slot Sequence Integrity TSSI) zusammengefaßt. Hieraus resultiert, neben besonderen Anforderungen an die Koppelnetze der Vermittlungsstellen, daß die N Einzelkanäle einer Nx64kbit/s-Verbindung zwischen den Vermittlungsstellen und von / zu den Endeinrichtungen immer im selben PCM-System liegen müssen.

Um die oben aufgeführten Bedingungen einzuhalten, müssen die Einzelkanäle der N-fach Verbindung jeweils in den Koppeleinheiten koordiniert und die Vermittlungsprozeduren pro Kanal durchgeführt werden. Dies bringt den Nachteil mit sich, daß die Prozessoren der Koppeleinheiten mit einer Vielzahl von Koordinations- und N-fach Vermittlungsprozeduren belastet werden und während dessen nicht für andere Vermittlungsaufgaben verwendet werden können.

Aus der US Patentschrift 4,512,014 ist eine Durchkopplung von aus mehreren Einzelkanälen zusammengesetzten Breitbandkanälen für Zeitmultiplexsysteme mit Deltamodulation bekannt. Einem Haltespeicher werden von der zentralen Steuerung Halte- bzw Sprachspeicheradressen nur jeweils eines Einzelkanals übermittelt, während die Adressen der die übrigen Teilkanäle des Breitbandsignals unter dem Einfluß einer entsprechenden Kennung mit Hilfe des Zeitlagenzählers zur zyklischen Ansteuerung des Haltespeichers dezentral selbständig erzeugt werden.

Die Aufgabe der Erfindung ist es, eine Schaltungsanordnung und ein Verfahren zur gemeinsamen Durchschaltung von mindestens zwei Einzelkanälen in einer Vermittlungseinheit unter Vermeidung der oben aufgeführten Nachteile anzugeben.

Die Aufgabe wird durch die Merkmale des Patentanspruchs 1 und 7 gelöst.

Die Erfindung bringt den Vorteil mit sich, daß in einer Koppeleinrichtung kein Koordinieren von N Einzelkanälen notwendig wird.

Die Erfindung bringt den Vorteil mit sich, daß alle vermittlungstechnischen Aktivitäten wie z.B. Ziffern Bewertung und Bearbeitung, Routing, Netzfeatures, Sperrbewertung oder Charging nur für einen Kanal, d. h. einmal je Durchschaltung der Gesamtverbindung anfallen.

Die Erfindung bringt den Vorteil mit sich, daß die Einhaltung der Reihenfolge der PCM-Zeitschlitze beim Durchschalten durch die Koppeleinrichtungen des Vermittlungssystems ohne größeren Aufwand erfolgen kann, da alle N Wege jeweils mit einem N-fach Einstellbefehl behandelt werden können.

Die Erfindung bringt den Vorteil mit sich, daß Störungen nur von einer Hauptverbindung abgearbeitet werden.

Weitere Besonderheiten sind in den Unteransprüchen angegeben.

Die Schaltungsanordnung und das Verfahren wird aus den nachfolgenden näheren Erläuterungen zu einem Ausführungsbeispiel anhand von Zeichnungen ersichtlich.

Es zeigen:
- Figur 1: ein Vermittlungsnetz und
- Figur 2: eine Speicherbelegung in einer Vermittlungsstelle mit den Ressourcen von N Einzelkanälen.

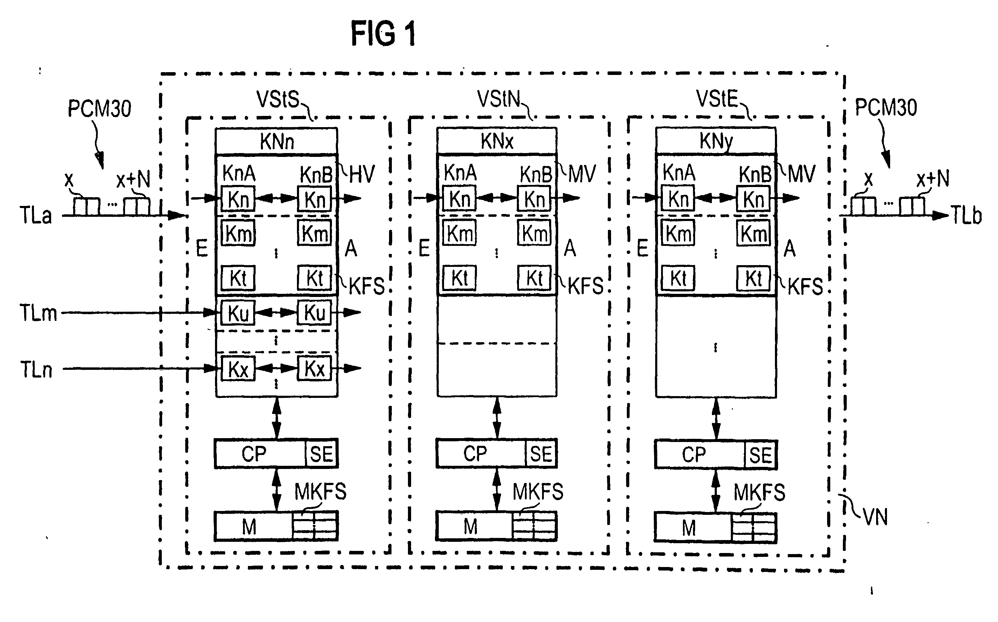

In der Figur 1 ist eine Möglichkeit einer Realisierung gezeigt, wie N Einzelkanäle gemeinsam durch Koppeleinrichtungen KNn, KNx,..., KNy von Vermittlungsstellen VStS, VStN,..., VStE eines Vermittlungsnetzes VN geleitet werden. Für die von einer Endeinrichtung eines Teilnehmers Tla belegten Kanäle x bis x+N eines PCM 30/PCM 24 Systems müssen eine entsprechende Anzahl von N Einzelkanälen in den Koppeleinrichtungen KNn, KNm,..., KNx der Vermittlungsstellen VStS, VStN,...,VStE belegt werden.

Um bei einer Belegung von mehreren Kanälen die von der Endeinrichtung des Teilnehmers Tla gegebene zeitliche Reihenfolge der N-PCM-Zeitschlitze einzuhalten, wird der Verbindungsaufbau für die zusammengehörigen N Einzelkanäle Kn, Km,...,Kt von einem ersten Kanal HV übernommen. Dieser erste Kanal HV, der nachfolgend auch Hauptverbindung genannt wird, übernimmt die Koordination der weiteren N-1 Einzelkanäle. Die Daten eines Verbindungsaufbau eines Kanals zwischen einem Eingang E und einem Ausgang A der Koppeleinrichtung KNn, KNx,..., KNy werden in einem Speicherbereich MKFS einer Speichereinheit M der jeweiligen Koppeleinrichtung KNn, KNm,..., KNx zwischengespeichert. Die Steuerung des ersten Kanals HV und die Koordination der weiteren N-1 Einzelkanäle durch den ersten Kanal HV werden von einer Steuereinheit SE eines Prozessors CP übernommen. Die Daten der vermittlungstechnischen Aktivitäten wie Ziffern Bewertung und Bearbeitung, Routing, Netzfeatures, Sperrbewertung, Charging usw. werden nur in den Ressourcen des ersten Kanals HV abgespeichert. Die Ressourcen der einzelnen Kanäle sind in einem Speicherbereich MKFS eines Speichers M abgelegt. Die Ressourcen der durch den ersten Kanal HV koordinierten passiven N-1 Einzelkanäle enthalten nur die Daten der jeweils in der Vermittlungsstelle belegten Wege.

Die Koordination bzw. Steuerung der prinzipiell gleichberechtigten N Einzelkanäle während des Verbindungsaufbaus durch alle Einrichtungen der Vermittlungsstelle VStS, VStN,..., VStE hindurch übernimmt jeweils der erste Kanal HV in den Koppeleinrichtungen KNn, KNx,..., KNy der Vermittlungsstellen VStS, VStN,..., VStE. Die zu steuernden bzw. zu koordinierenden weiteren Kanäle Km,...,Kt der N Einzelkanäle werden als - zusammengehörig markiert und so behandelt, daß bei allen Koppel- und Durchschalteeinrichtungen die Reihenfolge der einzelnen Zeitschlitze x bis x+N der vom Endgerät des Teilnehmers Tla belegten PCM 30 Zeitschlitze beibehalten wird, wie sie zu Beginn bzw. bei Eintritt der Verbindung in das Vermittlungsnetz VN vorlag.

In den Koppeleinrichtungen KNn, KNx,..., KNy sind beispielsweise Kanäle HV, Kn,..., Kt der zu bündelnden N Einzelkanäle innerhalb eines Ausschnittes KFS der Koppel- und Durchschalteeinrichtungen gezeigt. Erfindungsgemäß wird dem ersten Kanal HV die Kontrolle über die weiteren Kanäle Kn,..., Kt der zur Datenübertragung zu bündelnden N Kanäle HV, Kn,..., Kt zugeordnet. Unter der Steuerung des ersten Kanals HV werden von diesem alle N-1 passiven Einzelverbindungen mitgesteuert. Die N Einzelkanäle HV, Kn,..., Kt erscheinen in der Vermittlungsstelle VStS, VStN,..., VStE weiterhin bezüglich der Nutzung ihrer Ressourcen RKnA, RKmA,..., RKnB, RKmB. Für die Steuerung der N Einzelkanäle in der Vermittlungsstelle VStS, VStN,...,VSty und für die Signalisierungen im jeweiligen Netz ist aber nur der erste Kanal HV zuständig. Der erste Kanal HV führt nur einen Vermittlungsvorgang durch, nutzt aber parallel zu seinen eigenen Ressourcen RKnA, RKnB auch die Ressourcen RKmA, RKoA,..., RKmB, RKoB der N-1 passiven Einzelverbindungen der Kanäle Km,...,Kt.

Einrichtungen des ersten Kanals HV sorgen dafür, daß bei jedem einzelnen Koppelvorgang in der Koppeleinrichtung KNn, KNx, KNy innerhalb der Vermittlungsstelle VStS, VStN,...,VStE die auf der Eingangsseite E der Koppeleinrichtung KNn, KNx,..., KNy angebotene räumliche/logische und zeitliche Reihenfolge der Zeitschlitze der N Einzelkanäle transparent auf die abgehende Seite A der Verbindung übertragen wird, so daß auch über alle Koppelvorgänge in den Vermittlungsstellen VStS,...,VStE die Reihenfolge der zu Beginn der Verbindung belegten Zeitschlitzreihenfolge innerhalb eines PCM Systems eingehalten wird.

Hierzu ist es erforderlich, daß auf der Eingangsseite E der Koppeleinheit KNn,...,Kny ein Kanal Nm,..., Nt, der diesen N Einzelverbindungen angehört, ein erster Kanal HV als Hauptverbindung bestimmt wird. Zur Hauptverbindung HV wird bevorzugt der Zeitschlitz des physikalischen Teilnehmeranschlusses mit der niedrigsten Nummer bestimmt. In den Koppeleinrichtungen KNn, KNx und KNy wird jeweils die Eigenschaft der Hauptverbindung HV auf die Ausgangsseite A der Koppeleinrichtungen KNn, KNx und KNy übertragen. Den N-1 passiven Einzelverbindungen Km,... ,Kt ist zur Reihenfolge der physikalischen Anschlüsse logisch eine Nummer implizit zugeordnet, ohne explizit mit einer Nummer gekennzeichnet zu sein. Bei jedem Durchschalten der Kanäle Kn, ..., Kt einer einzelnen Koppeleinrichtung KNn, KNx,..., KNy ist diese Reihenfolge sicherzustellen, d. h. der i-te passive Kanal Km,..., Kt auf der Eingangsseite E ist mit dem physikalisch i-ten auf der Ausgangsseite eines Koppelnetzes KNn zu verbinden. Damit wird implizit die Einhaltung der Reihenfolge erhalten, ohne daß es erforderlich ist, dem jeweiligen passiven Kanal Km,..., Kt explizit eine Sequenznummer zuzuordnen. Durch diese Vorgehensweise ist sichergestellt, daß der i-te passive Kanal Km,..., Kt immer die Eigenschaft als i-te passive Kanals Km,..., Kt behält. Wird dies für alle einzelnen Koppeleinrichtungen KNn, KNx,..., KNy in der Verbindungsstrecke zwischen zwei Endgeräten durchgeführt, so bleibt die Reihenfolge der Zeitschlitze an der einzelnen Koppeleinrichtung KNx zeitlich und logisch erhalten. Für die gesamten Koppeleinrichtungen KNn, KNx,..., KNy überträgt sich jeweils diese Eigenschaft und gilt damit für die gesamte Verbindung. Damit ist garantiert, daß auf der Empfangsseite A die Information in genau derselben logischen und zeitlichen Reihenfolge vorliegt, wie sie gesendet wurde. An der Schnittstelle A zum empfangenden Teilnehmer Tlb kann dann die Eigenschaft, die dem ersten Kanal HV zugeteilt wurde, wieder entfernt werden, und die N Einzelverbindungen bzw. Einzelkanäle können gleichberechtigt dem Teilnehmer Tlb zugestellt werden.

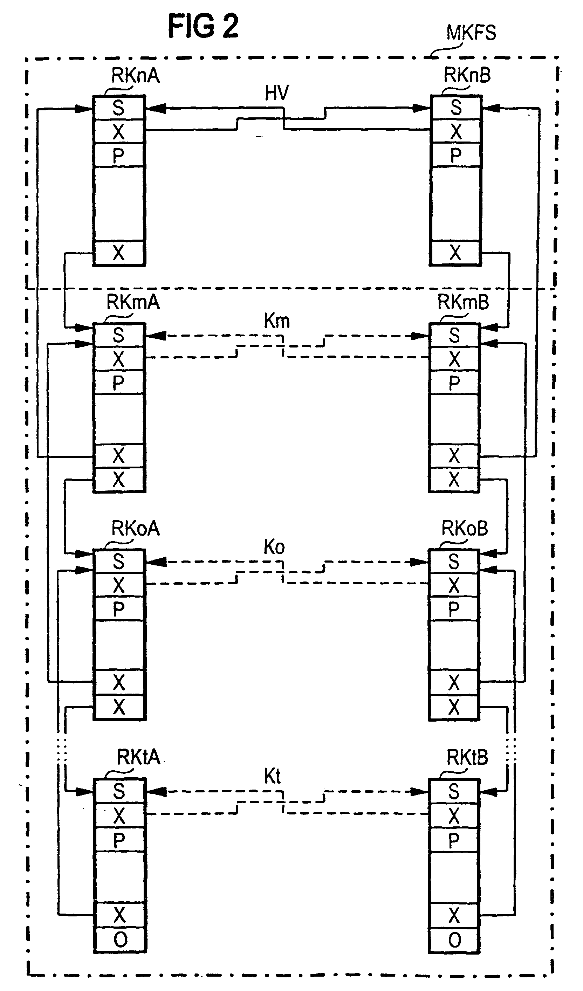

In Figur 2 ist ein Ausschnitt aus einem Speicherbereich MKFS gezeigt, in dem die Ressourcen RKnA, RKnB,..., RKtA, RKtB der einzelnen Kanäle Kn, Km, ..., Kt der N-fach Verbindung wiedergegeben sind. Ein Kanal Kn, Km, ..., Kt besitzt jeweils Ressourcen RKnA, RKnB die eingangsseitig und ausgangsseitig der Koppeleinrichtung KNn, KNx,..., KNy angeordnet sind. In den Ressourcen RKnA, RKnB,..., RKtA, RKtB wird jeweils der Status S und der Weg P abgespeichert, die die Verbindung innerhalb der Koppeleinheit KNn, KNx,...,KNy belegt abgespeichert. Zusätzlich sind in den Ressourcen alle Daten der vermittlungstechnischen Aktivitäten betreffend des Kanals hv; Km;..., Kt abgelegt. Um eine hohe Sicherheit bei einem Störfall zu gewährleisten, werden die Adressen der Ressourcen wechselseitig ausgetauscht, so daß für die jeweilige N-fach Verbindung die logische Zusammengehörigkeit der N Kanäle temporär gegeben ist. Der Status des Verbindungsaufbaus wird nur in den Ressourcen des ersten Kanals HV geführt. Die übrigen Ressourcen der N-fach Verbindung erhalten nur die Statusangabe "passiv".

## Patentansprüche

1. Verfahren zum Durchschalten von N Kanälen (HV, Km, Ko,..., Kt) einer N-fach Verbindung in einem Kommunikationsnetz (VN),
**dadurch gekennzeichnet,**
**daß** einem ersten Kanal (HV) der N-fach Verbindung die Steuerung über diese weiteren Kanäle (Km, Ko,..., Kt) der N-fach Verbindung übertragen wird, wobei bei einer Durchschaltung des ersten und der weiteren Kanäle (Km, Ko,..., Kt) durch das Kommunikationsnetz (VN) die räumliche und zeitliche Reihenfolge des ersten und der weiteren Kanäle (HV, Km, Ko,..., Kt) bestehen bleibt.

2. Verfahren nach Anspruch 1,
**dadurch gekennzeichnet,**
**daß** die Bestimmung des ersten und der weiteren Kanäle (HV, Km, Ko,..., Kt) während einer Verbindung zwischen mindestens zwei Endeinrichtungen erhalten bleibt.

3. Verfahren nach Anspruch 1,
**dadurch gekennzeichnet,**
**daß** die Ressourcen (RKnA, RKnB,..., RKtA, RKtB) des ersten und der weiteren Kanäle (HV, Km, Ko,..., Kt) weiterhin bei diesen verbleiben.

4. Verfahren nach Anspruch 1,
**dadurch gekennzeichnet,**
**daß** den weiteren Kanälen (Km, Ko,..., Kt) durch ihre physikalische Anschlußreihenfolge logisch jeweils eine Nummer implizit zugeordnet wird.

5. Verfahren nach Anspruch 1,
**dadurch gekennzeichnet,**
**daß** die weiteren Kanäle (Km, Ko,..., Kt) durch einen N-fach Einstellbefehl durch eine Koppeleinheit (KNn, KNx,..., KNy) durchgeschaltet werden.

6. Verfahren nach Anspruch 1,
**dadurch gekennzeichnet,**
**daß** die dem ersten Kanal zugeteilten Steuerungs- und Koordinationsaufgaben von Koppeleinheit zu Koppeleinheit für eine Verbindung dem ersten Kanal zugeteilt bleiben,
**daß** die Belegungsreihenfolge der Ausgänge der Koppeleinrichtung mit den weiteren Kanälen gleich der Belegung der Eingänge der Koppeleinrichtung entspricht.

7. Schaltungsanordnung zur Durchschaltung von N Kanälen (HV, Km, Ko,..., Kt) einer N-fach Verbindung in einem Kommunikationsnetz (VN),
**dadurch gekennzeichnet,**
**daß** eine Steuereinheit (SE) vorgesehen ist die einen ersten Kanal (HV) zur Steuerung der weiteren Kanäle der N-fach Verbindung bestimmt, wobei die Durchschaltung des ersten und der weiteren Kanäle derart erfolgt, daß bei einer Durchschaltung des ersten und der weiteren Kanäle (Km, Ko,..., Kt) durch das Kommunikationsnetz (VN) die räumliche und zeitliche Reihenfolge des ersten und der weiteren Kanäle (HV; Km, Ko,..., Kt) bestehen bleibt.

## Claims

1. Method for switching through N channels (HV, Km, Ko, ..., Kt) of an N-fold connection in a communications network (VN),
**characterized in that**
control of these further channels (Km, Ko, ..., Kt) of the N-fold connection is transferred to a first channel (HV) of the N-fold connection, the physical and temporal sequence of the first and further channels (HV, Km, Ko, ..., Kt) being retained when the first and further channels (Km, Ko, ..., Kt) are switched through the telecommunications network (VN).

2. Method according to Claim 1,
**characterized in that**
the definition of the first and further channels (HV, Km, Ko, ..., Kt) is retained during a connection between at least two terminal devices.

3. Method according to Claim 1,
**characterized in that**
the resources (RKnA, RKnB, ..., RKtA, RKtB) of the first and further channels (HV, Km, Ko, ..., Kt) furthermore remain with said channels.

4. Method according to Claim 1,
**characterized in that**
a number is in each case implicitly logically allocated to the further channels (Km, Ko, ..., Kt) by their physical connection sequence.

5. Method according to Claim 1,
**characterized in that**
the further channels (Km, Ko, ..., Kt) are switched by means of an N-fold setting command through a switching unit (KNn, KNx,..., KNy).

6. Method according to Claim 1,
**characterized in that**
the control and coordination tasks allocated to the first channel remain allocated to the first channel for the connection from one switching unit to the next, and **in that** the seizure sequence of the outputs of the switching device with the further channels corresponds to the seizure of the inputs of the switching device.

7. Circuit arrangement for switching through N channels (HV, Km, Ko, ..., Kt) of an N-fold connection in a communications network (VN),
**characterized in that**
a control unit (SE) is provided which defines a first channel (HV) to control the further channels of the N-fold connection, the switching-through of the first and further channels being effected in such a way that the physical and temporal sequence of the first and further channels (HV, Km, Ko, ..., Kt) is retained when the first and further channels (Km, Ko, ..., Kt) are switched through the communications network (VN).

## Revendications

1. Procédé pour commuter N canaux (HV, Km, Ko, ...,Kt) d'une connexion N fois dans un réseau de communication (VN),
**caractérisé en ce que**
dans un premier canal (HV) de la connexion N fois, la commande est transmise par l'intermédiaire de ces autres canaux (Km, Ko, ... ,Kt) de la connexion N fois, la séquence spatiale et temporelle du premier canal et des autres canaux (HV, Km, Ko, ..., Kt) restant maintenue en cas d'une commutation du premier canal et des autres canaux (Km, Ko, ..., Kt) au moyen du réseau de communication (VN).

2. Procédé selon la revendication 1,
**caractérisé en ce que**
la détermination du premier canal et des autres canaux (HV, Km, Ko, ..., Kt) reste maintenue pendant une connexion entre au moins deux dispositifs terminaux.

3. Procédé selon la revendication 1,
**caractérisé en ce que**
les ressources (RKnA, RKnB, ..., RKtA, RKtB) du premier canal et des autres canaux (HV, Km, Ko, ..., Kt) restent maintenues dans ceux-ci.

4. Procédé selon la revendication 1,
**caractérisé en ce que**
un numéro est logiquement respectivement attribué implicitement aux autres canaux (Km, Ko, ..., Kt) en raison de leur séquence de connexion physique.

5. Procédé selon la revendication 1,
**caractérisé en ce que**
les autres canaux (Km, Ko, ..., Kt) sont commutés par une instruction de paramétrage de N fois au moyen d'une unité de couplage (KNn, KNx, ..., KNy).

6. Procédé selon la revendication 1,
**caractérisé en ce que**
les tâches de commande et de coordination d'unité de couplage à unité de couplage, attribuées au premier canal, restent attribuées au premier canal pour une connexion,
**en ce que** la séquence d'occupation des sorties du dispositif de couplage avec les autres canaux est identique à l'occupation des entrées du dispositif de couplage.

7. Dispositif pour commuter N canaux (HV, Km, Ko, ..., Kt) d'une connexion N fois dans un réseau de communication (VN),
**caractérisé en ce que**
une unité de commande (SE) est prévue, qui détermine un premier canal (HV) pour la commande des autres canaux de la connexion N fois, la commutation du premier canal et des autres canaux étant réalisée de telle manière que la séquence spatiale et temporelle du premier canal et des autres canaux (HV, Km, Ko, ..., Kt) reste maintenue en cas d'une commutation du premier canal et des autres canaux (Km, Ko, ..., Kt) au moyen du réseau de communication (VN).
